# EUROPÄISCHE PATENTSCHRIFT

(11) **EP 1 598 119 B1**
(45) Veröffentlichungstag und Bekanntmachung des Hinweises auf die Patenterteilung: **08.07.2009**
(21) Anmeldenummer: 05010620.2
(22) Anmeldetag: 17.05.2005
(51) Int. Cl.: B05B 17/06

(54) **Ultraschallvernebelungsgerät sowie Verfahren zum Ultraschallvernebeln**
Ultrasound wave nebulizer with central top fan and associated nebulizing method
générateur du brouillard par ultrasons muni d' une ventilation centrale et méthode

(30) Priorität: 17.05.2004 DE 202004007924 U
(43) Veröffentlichungstag der Anmeldung: 23.11.2005
(73) Patentinhaber: WAECO International GmbH, 48282 Emsdetten (DE)
(72) Erfinder: Esch, Franz-Josef, 48477 Hörstel (DE)
(74) Vertreter: Grosse - Schumacher - Knauer - von Hirschhausen

(56) Entgegenhaltungen:
- DE-A1- 3 049 244
- FR-A- 2 677 437
- US-A- 3 690 317
- US-A- 4 708 826
- US-A- 5 136 804

## Beschreibung

Die Erfindung betrifft ein Ultraschallvemebelungsgerät nach dem Oberbegriff des Schutzanspruchs 1.

Bei derartigen Ultraschallvernebelungsgeräten werden mittels einer Ultraschallschwingungseinheit und einer Lüftungseinheit aus einer Reinigungsflüssigkeit Aerosole bereitgestellt, welche für die Wartung und/oder Pflege von Klimaanlagen verwendet werden können. Dabei sind diese Ultraschallvemebelungsgeräte in der Regel derart aufgebaut, daß die Reinigungsflüssigkeit erst von einem Vorratsbehälter zu der Ultraschallschwingungseinheit gelangen muß, bevor sie von dieser zu einem Aerosol umgewandelt wird. Dieses wird dann mittels einer Lüftungseinheit in Richtung einer Austrittsöffnung geleitet.

Für das Bereitstellen eines Aerosols für die Wartung und/oder Pflege von Klimaanlagen ist ein Ultraschallvernebelungsgerät aus der EP 1 177 834 A1 bekannt. Dieses Gerät besteht aus einem tragbaren Container, welcher zumindest zwei fluidisch verbundene Räume besitzt, wobei im Bereich der Raumtrennwand ein von der Reinigungsflüssigkeit durchströmbarer Körper angeordnet ist. Dieser weist in seinem Durchströmungsbereich eine Ultraschallschwingungseinheit, eine Vorratsflaschen-Aufnahmaöffnung sowie einen diese Öffnung mit der Ultraschallschwingungseinheit verbindenden Kanal auf. Die im untersten Bereich des Körpers von der Ultraschallschwingungseinheit erzeugten Aerosole, werden in den zweiten (oberen) Raum abgegeben. Ein Gebläse, welches an einer nach außen durchbrochenen Wand des Gehäuses in dem ersten (unteren) der beiden Räume angeordnet ist, leitet Luft horizontal durch den ersten Raum und, nach Umlenkung um die Vorratsflaschen-Aufnahmeöffnung, horizontal durch den zweiten Raum und von dort nach außen. Die offene Verbindung zwischen der mit ihrer Entleer mündung nach unten weisenden Vorratsflasche und der Ultrauchalischwingungseineheit erfordert ein vorsichtiges Dosieren der Flüssigkeit aus der (eigenständigen) Vorratsflasche. Deren Inhalt wird sogleich in Aerosol umgewandelt und von dem Luftstrom aus dem zweiten Raum zum Auslass geleitet.

Bei solchen Ultraschallvemebelungsgeräten erfährt die so angeordnete Ultraschallschwingungseinheit aufgrund des geringen sie benetzenden Flüssigkeitsvolumens nur eine eingeschränkte Kühlung, was eine Verwendung von leistungsstarken Piezo-Elementen verhindert. Es ist kaum möglich, Rückstände der Reinigungsflüssigkeitsrückständen zu entreinigen. Die Verwendung eines solchen Ultraschallvernebelungsgeräts erfordert die Verwendung von speziell geformten Vorratsflaschen.

Die US 58 03 362 A offenbart ein Medikamenteninhalationsgerät, bei dem ein flüssiges Medikament, welches sich im unteren Bereich eines Behälters befindet, durch einen Ultraschallerzeuger, der in die Bodenplatte des Behälters eingebaut ist, das Medikament atomisiert. Ein von einem separat, seitlich angeordneten Ventilator erzeugter Luftstrom wird durch Umlenkung über den Flüssigkeitsspiegel zu einem Mundstück (17) geleitet, über welches der Patient inhaliert. Ein derartiges Gerät ist für den Bedarf der Pflege und/oder Wartung von Klimaanlagen mittels eines Aerosols nicht konzipiert.

Gemäß der FR 2 677 437 A wird ein Luftstrom dadurch angefeuchtet und aufgefrischt, dass Flüssigkeit In einem nahe dem Gehäuseboden angeordneten wannenartigen Behälter mittels eines an einer Wannenseite unter dem Wannenboden angeordneten Ultraschallgenerators zur Erzeugung eines Aerosolnebels angeregt wird. Ein motorisch angetriebenes Lüfterrad mit vertikaler Achse befindet sich am oberen Ende eines kaminartigen Schachtes, in den von unten durch untere Öffnungen Luft eintreten und oben unterhalb des Lüfterrades durch obere Öffnungen wieder austreten kann, so dass ein zentraler Luftstrom nach oben in eine Misch- und Austrittskammer gefördert wird. Dieser Luftstrom ist frei von Aerosol. Seitlich dieses zentralen Kamins befindet sich ein vertikal oberhalb des Ultraschallerzeugers angeordneter Aufnahmeraum für den Aerosolnebel. Dieser Raum weist eine seitliche Lufteintriftsöffnung auf und kommuniziert an seinem oberen Ende mit der Saugzone des Lüfterrades. Dadurch wird der Aerosolnebel seitlich angeströmt und nachfolgend in seiner nach oben gerichteten natürlichen Strömungsrichtung durch den vom Lüfterrad erzeugten Saugstrom mitgerissen.

Der Erfindung liegt daher die Aufgabe zugrunde, ein Ultraschallvernebelungsgerät der eingangs beschriebenen Art derart auszugestalten, daß es eine effiziente Bereitstellung von Aerosolen gewährleistet. Dabei ist ein möglichst kompakter Geräteaufbau gewünscht. Ein leichtes Reinigen der Ultraschallschwingungseinheit ist besonders wünschenswert. Eine Überhitzung der Ultraschallschwingungseinheit sollte vermieden und ein einfaches und verbraucherfreundliches Nachfüllen von Reinigungsflüssigkeit ermöglicht werden.

Erfindungsgemäß wird ein Aerosol-Bereitstellungsgerät mit den Merkmalen des Schutzanspruchs 1 vorgeschlagen, wobei der Oberbegriff aus dem zitierten Stand der Technik bekannt ist.

Ein solches Gerät - nachfolgend auch als Ultraschallvernebelungsvorrichtung bezeichnet - erzeugt zumindest an der freien Oberfläche des gesamten Flüssigkeitsvorrates mittels des in den Vorrat eingetauchten Ultraschallerzeugers ein Aerosol. Die - bevorzugt - zentral oberhalb der Ultraschallgeschwindigkeitseinheit angeordnete Lüftungseinheit treibt den Luftstrom - bevorzugt mittels einer den Luftstrom und von der Zuströmseite zu einer Abströmseite umlenkenden kanalisierenden Einrichtung - unter intensivem Mischen mit dem Aerosol auf den Flüssigkeitsspiegel des Vorrats und führt das Mischungspunkt über die Austrittsöffnung nach außerhalb des Gehäuses.

Durch die Erfindung wird es möglich, besonders leistungsstarke Ultraschallschwingungserzeuger zu verwenden, wie sie für die Wartung bzw. Pflege von Klimaanlagen und/oder von Innenräumen, insbesondere in Fahrzeugen, wünschenswert Ist. Gleichzeitig kann ein ausreichend leistungsstarkes Gebläse verwendet werden, um die nicht unerheblichen Leitungswiderstände beim Reinigen von Fahrzeugklimaanlagen zu überwinden. Dabei erzeugt das Gerät eine für den Anwendungszweck ausreichende Aerosolkonzentration im austretenden Luft/Aeorosol-Gemisch. Durch die Erfindung ist es auch möglich, das Gerät trotz seiner hohen Leistungsfähigkeit außerordentlich kompakt als komplette Geräteeinheit zu bauen, so dass das gesamte Gerät z. B. innerhalb des beengten Fußraumes eines Personenkraftwagens Platz findet. Dem für Klimaanlagen besonders wichtigen Hygienegesichtspunkt wird durch den Geräteaufbau in hervorragender Weise Rechnung getragen, wie sich aus dem weiteren ergibt.

Wenn die Kanalisier- und Umlenkungseinrichtung für den Luftstrom und das Luft/Aerosol-Gemisch ein unten offenes Lüftungsrohr ist, wird damit eine besonders vorteilhafte, technische Wirkung für eine Vielzahl von Aspekten erzielt, insbesondere hinsichtlich einer intensiven Luft/Aerosol-Durchmischung und -Vergleichmäßigung, aber auch hinsichtlich eines besonders kompakten Geräteaufbaus und eines vereinfachten Handlings beim Nachfüllen von Reinigungsflüssigkeit sowie bei der Gerätereinigung im Inneren. Außerdem bietet sich eine besonders vorteilhafte Anordnungsmöglichkeit für eine Einrichtung zum Schutz des Gebläses gegen Eindringen von hochspritzenden Flüssigkeitströpfchen .

Gemäß einer bevorzugten Ausführungsform des Erfindungsgegenstandes ist die Lüftungseinheit mit einer sie vor dem Aerosol oder der vorrätig gehaltenen Flüssigkeit schützenden Vorrichtung ausgestattet, um einen allzeit gefahrlosen Betrieb zu ermöglichen.

Eine zweckmäßige Ausgestaltung des Erfindungsgegenstandes sieht vor, daß das Gerät zusätzlich mit Beleuchtungsmitteln ausgestattet ist, welche vorzugsweise Innerhalb des Gehäuses angeordnet sind und welche insbesondere während einer Benutzung des Geräts aktiv sind, um sowohl die Betriebstätigkeit des Geräts anzuzeigen, als auch eine exakte Ablesbarkeit des Flüssigkeitsspiegels zu ermöglichen.

Vorzugsweise ist das Gerät seitlich mit einem Henkel ausgestattet, um einen unproblematischen Transport zu ermöglichen.

In einer vorteilhaften Ausgestaltung ist das Gerät mit einer, insbesondere durch die Gehäusekontur definierten, Soll- und/oder Ist-Standsmarke für das Flüssigkeitsniveau ausgestattet, die eine Ablesbarkeit des Flüssigkeitsspiegels auch von außen ermöglicht, um Unter- und/oder Überschreitungen des geringsten und/oder größten erlaubten Füllstandes visuell feststellen zu können.

Es ist von Vorteil, wenn die Ultraschallschwingungseinheit und die Lüftungseinheit von einer gemeinsamen Spannungsversorgung gespeist werden, so daß möglichst wenige elektrische Verbindungen verwendet werden müssen.

Es ist weiterhin von Vorteil, daß das Gerät mit einer durch einen verlager- oder abnehmbaren Deckel verschließbaren Öffnung zum Einfüllen der Flüssigkeit ausgestattet ist, so daß ein unproblematisches Nachfüllen möglich ist.

Des Weiteren ist es vorgesehen, den Deckel mit mindestens einer, insbesondere schlitzartig unterteilten Lufteinlassöfffnung zu versehen, so daß die die Zirkulation des Aerosols fördert.

In einer vorteilhaften Ausgestaltung ist die Lüftungseinheit an dem Deckel befestigt und mit diesem bewegbar, so daß während eines Nachfüllvorgangs bei geöffnetem Deckel die Lüftungseinheit der einzufüllenden Reinigungsflüssigkeit nicht im Wege steht.

Schließlich wird erfindungsgemäß vorschlagen, daß die die Lüftungseinheit schützende Vorrichtung und die den Luftstrom kanalisierende und umlenkende Einrichtung eine Einheit bilden, was für einen eventuellen Ausbau z.B. bei der Gerätereinigung vorteilhaft ist.

Die vorgenannten sowie die beanspruchten und in den Ausführungsbeispielen beschriebenen erfindungsgemäß zu verwendenden Bauteile unterliegen in ihrer Größe. Formgestaltung, Materiafauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen sowie aus der nachfolgenden Beschreibung der zugehörigen Zeichnung, in der - beispielhaft - ein bevorzugtes Ausführungsbeispiel der erfindungsgemäßen Anordnung eines Ultraschallvemebelungsgerätes sowie eines Verfahrens zum Ultraschallvernebelns dargestellt ist. In der Zeichnung zeigen:
- Figur 1: eine perspektivische Schnittansicht eines erfindungsgemäßen Ultraschallvemebelungsgeräts mit geschlossenem Deckel;

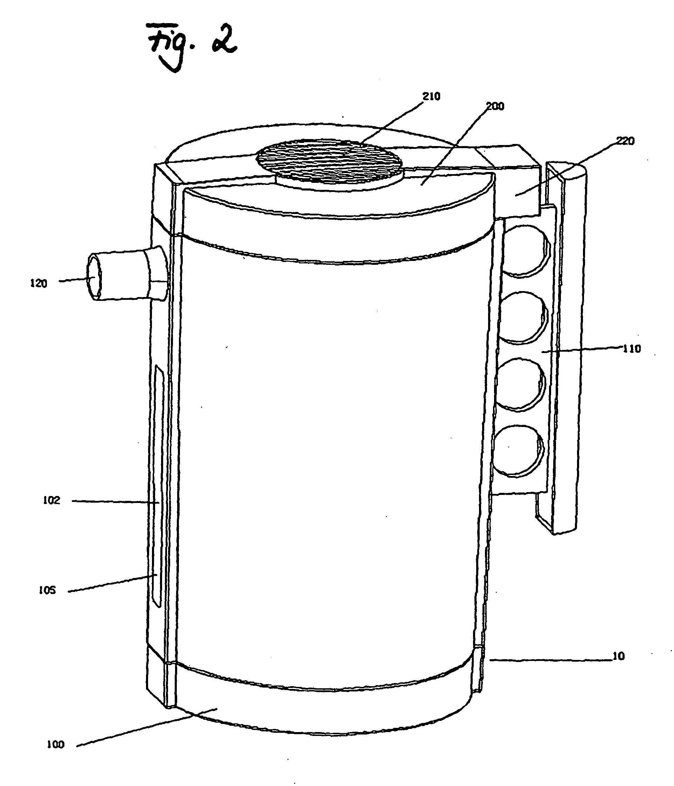

- Figur 2: dasselbe Ultraschallvemebelungsgerät in Außenansicht.

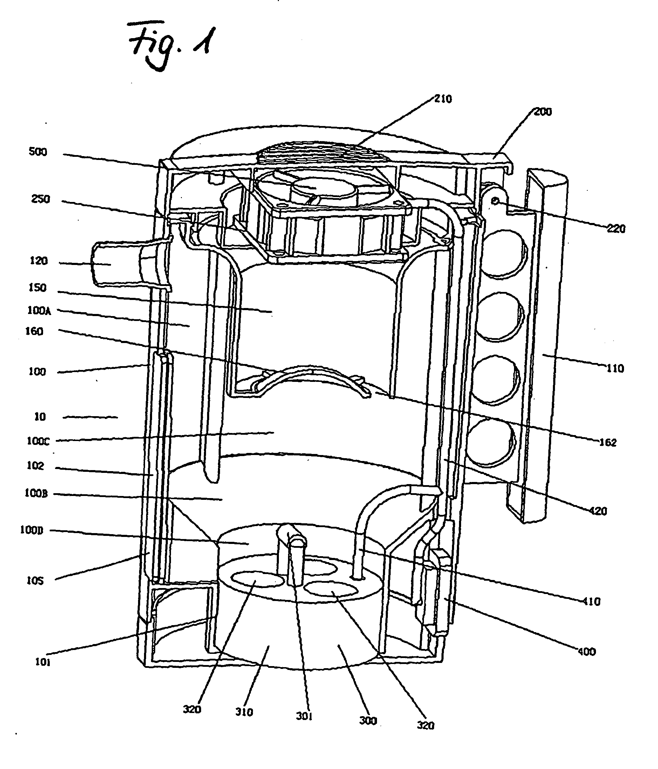

Gemäß Figur 1 weist das Ultraschallvemebefungsgerät 10 ein Gehäuse 100 auf, welches in der bevorzugten Ausführungsform im unteren Bereich innen nach unten sich verjüngt (Trichterraum 100 B) und eine etwa zylindrische Aufnahme 101 im Bodenbereich sowie einen den Innenraum verschließenden Deckel 200 aufweist. Das Gehäuse 100 ist mit einem, beispielsweise gelochten, Henkel 110 transportierbar. Im oberen Bereich (Ringraum 100A) des Gehäuses 100 ist eine Austrittsöffnung 120 seitlich angeordnet, welche vorzugsweise dem Henkel 110 diametral gegenüber liegt. Im Inneren des Gehäuses 100 ist eine als Ganzes zylindrische Ultraschallschwingungseinheit 300 in die Aufnahme 101 eingetaucht und, z.B. für Reinigungszwecke, herausnehmbar. Dabei kann ein Füllstandssensor 301 als Handhabe dienen. Die Einheit 300 besteht im vorliegenden Fall aus einem Aufnahmekörper 310, welcher mit drei Vertiefungen (Aussparungen 320, 330, 340) versehen ist, in denen sich jeweils ein formgleiches PiezoElement (nicht dargestellt) befindet. Eine solche Einheit ist besonders leistungsstark. Es versteht sich von selbst, daß andere Ausgestaltungen der Ultraschallschwingungseinheit 300 möglich sind. So ist es auch möglich, die Ultraschallschwingungselnheit oberhalb des Gehäusebodens, von der Flüssigkeit ganz oder weitgehend umgeben, anzuordnen, insbesondere mit der Deckeleinheit oder den nachgeordneten Luftführeinrichtungen zwecks gemeinsamen Entfemens zu koppeln.

Die Ultraschallschwingungseinheit 300 wird von einer Spannungsversorgung 400, wie einem Stromkabelanschluss, mit der für den Betrieb der Piezo-Elemente notwendigen Spannung versorgt. Diese wasser- und gasdichte Spannungsversorgung 400 stellt auch die notwendige Spannung für die in dem Deckel 200 angeordnete Lüftungseinheit 500 bereit. Die Spannungsversorgung 400 kann - wie in der beschriebenen Ausführungsform - in einem von der Reinigungsflüssigkeit getrennten Bereich, insbesondere seitlich des Trichterraumes 100 B angeordnet sein.

Die Lüftungseinheit 500 ist bezüglich des Gehäuse-Innenraumes zentral und für ein nach unten Richten des Luftstroms angeordnet und hierzu vorteilhafterweise mit dem Deckel 200, insbesondere fest, verbunden, so daß bei einem Öffnen des Deckels 200 die Lüftungseinheit 500 aus dem Bereich der Einfüllöffnung 250 mit herausbewegt wird. Die Lüftungseinheit 500 ermöglicht somit eine effektive Luft-Zirkulation, bei der Außenluft in das Gehäuseinnere geführt wird und das sich im Inneren des Gehäuses 100 bildende Aerosol mit der Lust intensiv vermischt und das Gemisch nach außen geführt wird. Direkt oberhalb der Lüftungseinheit 500 sind Lüftungsschlitze 210 in dem Deckel 200 vorgesehen.

Das Ultraschallvernebelungsgerät 10 ist zusätzlich mit einer im oberen Bereich des Gehäuses 100 angeordneten, den Luftstrom kanalisierenden und umlenkenden Einrichtungen 150 ausgestattet. In der dargestellten, bevorzugten Ausgestaltung ist die Einrichtung 150 als unten offenes Luftführungsrohr gestaltet und trägt gleichzeitig eine die Lüftungseinheit 500 vor dem Aerosol oder der vorrätig gehalten Flüssigkeit schützende Einrichtung 160, wobei diese im vorliegenden Fall eine Einheit bilden. Dies ist jedoch nicht zwingend notwendig. Die Schutzeinrichtung 160 besteht bevorzugt aus einer (von unten betrachtet) konkaven Prallplatte, die zentral mit seitlichem Abstand zu dem Luftführungsrohr unter Bildung einer ringförmigen Öffnung 162 angeordnet ist. Durch diese Gestaltungselemente, die auch einzeln für sich genommen bereits außerordentlich nützlich sind, wird eine besonders vorteilhafte Luftkanalisierung mit relativ hoher Austrittsgeschwindigkeit und eine besonders gute Mischwirkung mit dem Aerosol erreicht, die auch durch die konkave Praliplattenforrn in dem Mischraum 100C erzielt wird. Gleichzeitig verhindert die Schutzeinrichtung 160 ein Aufspritzen von Flüssigkeitströfpchen in das Gebläse der Lüftungseinheit 500. Der sich radial außerhalb des Luftführungsrohres bildende Ringraum 100A ermöglicht ein rasches Entfernen von Luft/Aerosol-Gemisch bei vergleichsweise mäßiger Strömungsgeschwindigkeit und unterstützt die Gemischvergleichmäßigung, bevor dieses durch die sich bevorzugt querschnittsverjüngende Austrittsöffnung 120 unter emeuter Beschleunigung aus dem Gerät austritt und über einen in der Zeichnung nicht dargestellten Pfad, wie einen Schlauch in eine Einlassöffnung einer Klimaanlagen eintritt.

Die Funktionsweise des Ultraschallvernebelungsgeräts 10 wird nun im Folgenden anhand einer beispielhaften Beschreibung einer Inbetriebnahme erläutert:

Vor der eigentlichen Inbetriebnahme muß das Gerät 10 mit einer insbesondere für die Wartung und/oder Pflege von Klimaanlage geeigneten Reinigungsflüssigkeit aufgefüllt werden. Dazu wird der vorzugsweise mit einem Schamier 220 versehene aufklappbare Deckel 200 samt Gebläse der Kanalisierungs- und Umlenkeinrichtung 150 sowie der Schutzeinrichtung 160 hoch geschwenkt. Wenn die Baueinheit 150, 160 vom Deckel unabhängig aber ggf. entfembar in das Aufnahme-Gehäuse 100 eingesetzt ist, so wird die Reinigungsflüssigkeit in die von der Einheit 150, 160 bereitgestellten Einfüllöffnung 250 eingelassen. Da die Schutzeinrichtung 160 an ihrer Unterseite mit den etwa einen Ring bildenden Öffnungen 162 versehen ist, fließt die Reinigungsflüssigkeit zügig in den unteren Bereich des Gehäuses 100, in dem sich auch die Ultraschallschwingungseinheit 300 befindet.

Eine Sollstandsmarke 105 und ein Schauglas 102, welche ein Ablesen des Flüssigkeitsniveaus von außerhalb ermöglichen, gestatten eine optische Auskunft über den Füllstand an Reinigungsflüssigkeit. Nach Einfüllen der Reinigungsflüssigkeit bis zu einer vorgegebenen Füllstandshöhe kann der Deckel 200 wieder geschlossen werden. Durch ein anschließendes Verbinden der Spannungsversorgung 400 mit einer externen Spannungsquelle werden die in der Ultraschallschwingungseinheft 300 angeordneten Piezo-Elemente über die Versorgungsleitung 410 mit Energie versorgt, welche mit einer Frequenz schwingen, die optimal für das Erzeugen eines Aerosols aus einer Flüssigkeit ist.

Da die Piezo-Elemente ganz in die den Flüssigkeitsvorrat bildenden Reinigungsflüssigkeit eingetaucht sind, wird ein Aerosol, zumindest an der freien Oberfläche der Flüssigkeitsvorratszone, aus der Flüssigkeit erzeugt. Gleichzeitig dient die Reinigungsflüssigkeit auch als Kühlmittel, das die von den Piezo-Elementen erzeugte Wärme ableitet und verteilt. Aufgrund der relativ hohen Menge der die Piezo-Elemente bedeckenden Reinigungsflüssigkeit und der Tatsache, daß aufgrund der Erzeugung des Aerosols und der entstehenden Temperaturgradlenten eine Wärme verteilende Diffusion in der Flüssigkeit erzeugt wird, kann eine optimale Kühlung garantiert werden. So kann auch eine sehr leistungsstarke Ultraschalleinheit verwendet werden.

Die gleichzeitige Inbetriebnahme der über die Versorgungsleitung 420 mit der Spannungsversorgung 400 verbundene Lüftungseinheit 500 erzeugt innerhalb des Gehäuses einen Luftstrom, welcher sich intensiv mit dem Aerosel mischt und über die Austrittsöffnung 120 nach außerhalb des Gehäuses 100 führt. Die nun aus der Austrittsöffnung 120 ausströmende Reinigungsflüssigkeit in Form eines Aerosols kann dann bequem für die Wartung und/oder Pflege von Klimaanlagen verwendet werden.

Das Ultraschallvemebelungsgerät ermöglicht einen relativ geräuscharmen Betrieb. Die Verwendung nicht dargestellter Beleuchtungsmittel, welche vorzugsweise im Inneren des Gehäuses, insbesondere in dem aus z. B. Kunststoff bestehenden Aufnahmekörper 310, angeordnet sind, ist hilfreich. Die während des Betriebs des Ultraschallvemebelungsgerät 10 aktivierte Beleuchtung zeigt dann, durch das Schauglas 102 nach außen leuchtend, den Betrieb des Geräts an. Außerdem ermöglicht sie ein Ablesen der Höhe des in dem Gerät noch befindlichen Flüssigkeitsspiegels, insbesondere auch an dunklen Orten, wie beispielsweise Im Fußraum eines Kraftfahrzeuges. Die Aerosol-Erzeugung wird bei Erreichen des Position eines Füllstandssensors 301 automatisch beendet.

Nach einiger Zeit kann es notwendig sein, die Ultraschallschwingungseinheit 300 von Rückständen der Reinigungsflüssigkeiten zu reinigen. Es ist daher vorgesehen, die kanalisierende und umlenkende Einrichtung 150 bzw. die Schutzeinrichtung 160 lösbar in dem Gehäuse anzuordnen. Nach dem Abnehmen der Einheit 150, 160 wird ein unmittelbarer Zugriff auf die Utraschallschwingungseinheit 300 gewährt, so daß auch dieser entfernt und alle sensiblen Bereiche gereinigt werden können.

### Bezugszeichenliste

- Ultraschallvernebelungsgerät,: 10
- Gehäuse: 100
- Ringraum: 100 A
- Trichterraum: 100 B
- Mischzone: 100 C
- Zylindrischer Bereich: 100 D
- Aufnahme: 101
- Schauglas: 102
- Sollstandsmarke: 105
- Henkel: 110
- Austrittsöffnung: 120
- Kanalisier- und Umlenk-Einrichtung: 150
- Schutzeinrichtung: 160
- Öffnungen der Schutzeinrichtung: 162
- Deckel: 200
- Lüftungseinlaßöffnungen: 210
- Schamier: 220
- Einfüllöffnung: 250
- Ultraschalischwingungseinheit: 300
- Handhabe: 301
- Aufnahmekörper: 310
- Aussparungen: 320
- Spannungsversorgung: 400
- Versorgungsleitungen: 410, 420
- Lüftungseinheit: 500

## Patentansprüche

1. Gerät zum Bereitstellen eines Aerosols für die Wartung und/oder Pflege von Klimaanlagen, mindestens bestehend aus
einem mit einer Austrittsöffnung (120) ausgestatteten Gehäuse (100) zur Aufnahme einer Flüssigkeit oder eines Flüssigkeitsgemischs,
einer in dem Aufnahme-Gehäuse (100) Innerhalb einer Flüssigkeitsvorratszone desselben angeordneten Ultraschallschwingungseinheit (300), um ein Aerosol zumindest an der freien Oberfläche des Flüssigkeitsvorrates zu erzeugen, und
einer Lüftungseinheit (500),
bei dem ein von der Lüftungseinheit (500) angetriebener Luftstrom in Richtung auf die Oberfläche des Flüssigkeitsvorrates leitbar und über die Austrittsöffnung (120) sodann nach außerhalb des Aufnahme-Gehäuses (100) führbar ist,
mit einer den Luftstrom kanalisierenden und von einer Zuströmseite zu einer Abströmseite umlenkenden Einrichtung (150),
**dadurch gekennzeichnet daß** die Lüftungseinheit (500) im Betriebszustand zentral oberhalb des Flüssigkeitsvorrats mit der Ultraschalischwingeinheit (300) nach unten gerichtet angeordnet ist.

2. Gerät nach Anspruch 1, **dadurch gekennzeichnet, daß** die Kanalisier- und Umlenkeinrichtung (150) ein unten offenes Luftführungsrohr ist.

3. Gerät nach Anspruch 1 oder 2, **dadurch gekennzeichnet, daß** die Kanalisier- und Umlenkeinrichtung (150) und das Aufnahmegehäuse (100) konzentrisch zueinander angeordnet sind.

4. Gerät nach einem der Ansprüche 1 bis 3 mit einer die Lüftungseinheit (500) vor dem Aerosol und/oder der vorrätig gehaltenen Flüssigkeit schützenden Einrichtung (160) ausgestattet ist.

5. Gerät nach Anspruch 4, **dadurch gekennzeichnet, daß** die Schutzeinrichtung (160) eine der Kanalisier und Umlenkeinrichtung (150) zugeordnete Prallplatte aufweist.

6. Gerät nach Anspruch 5, **dadurch gekennzeichnet, daß** die Prallplatte zentral im Mündungsbereich der Kanalisier- und Umlenkeinrichtung (150) angeordnet ist.

7. Gerät nach einem der Ansprüche 4 bis 6, **dadurch gekennzeichnet, daß** die Schutzeinrichtung (160) mit Beabstandungsmitteln zur Kanalisier und Umlenkeinrichtung (150) befestigt ist.

8. Gerät nach einem der Ansprüche 5 bis 7, **dadurch gekennzeichnet, daß** die Prallplatte eine konkave Unterseite und ggf. eine konvexe Oberseite aufweist.

9. Gerät nach einem der Ansprüche 1 bis 8, bei dem das Aufnahme-Gehäuse (100) in seinem oberen Bereich mit einer durch einen verlagerbaren oder abnehmbaren Deckel (200) verschließbaren zentralen Öffnung (250) ausgestattet ist.

10. Gerät nach Anspruch 9, bei dem der Deckel (200) mit Lufteinlasssöffnungen (210) versehen ist.

11. Gerät nach Anspruch 9 oder 10, bei dem die Lüftungseinheit (500) an dem Deckel (200) befestigt und mit diesem bewegbar ist.

12. Gerät nach einem der Ansprüche 4 bis 11, bei dem die die Lüftungseinheit (500) schützende Einrichtung (160) und die Kanalisier und Umlenkeinrichtung (150) eine entfernbare Einheit bilden.

13. Gerät nach einem der Ansprüche 4 bis 12, **dadurch gekennzeichnet, daß** die Lüftungseinheit (500), die Schutzeinrichtung (160) und die kanalisierende und umlenkende Einrichtung (150) an dem Deckel (200) befestigt und mit diesem bewegbar sind.

14. Gerät nach einem der Ansprüche 1 bis 13, **dadurch gekennzeichnet, daß** die Austrittsöffnung (120) des Aufnahme-Gehäuses (100) an einem Ringraum (100 A) desselben angeordnet ist.

15. Gerät nach einem der Ansprüche 1 bis 14, bei dem die Ultraschallschwingungseinheit (300) in dem Aufnahme-Gehäuse (100) einsetz- und wieder entnehmbar angeordnet ist

16. Gerät nach einem der Ansprüche 1 bis 15, bei dem die Ultraschallschwingungseinheit (300) in einer schachtartigen Aufnahme (101) angeordnet ist.

17. Gerät nach einem der Ansprüche 1 bis 16, **dadurch gekennzeichnet, daß** die Ultraschallschwingungseinheit (300) gemeinsam mit der Lüftungseinheit aus dem Aufnahme-Gehäuse (100) entfernbar ist.

18. Gerät nach einem der Ansprüche 1 bis 17, **dadurch gekennzeichnet, daß** die Ultraschallschwingungseinheit (300) mit einer Handhabe zum Einsetzen und Entfernen versehen ist.

19. Gerät nach einem der Ansprüche 1 bis 18, **dadurch gekennzeichnet, daß** die Ultraschallschwingungseinheit (300) einen Aufnahmekörper (310) mit Aussparungen (320) für je mindestens einen Ultraschallschwinger aufweist.

20. Gerät nach einem der Ansprüche 1 bis 19, **dadurch gekennzeichnet, daß** die Ultraschallschwingungseinheit (300) im Bodenbereich eines Trichterraumes (100 B) oder in einem sich daran anschließenden, insbesondere zylindrischen Raumbereich (100 D) angeordnet ist.

21. Gerät nach einem der Ansprüche 1 bis 20 mit Beleuchtungsmitteln innerhalb des Geräts (10).

22. Gerät nach einem der Ansprüche 1 bis 21 mit einer Solllstandsmarke (105) und/oder einem Minimalstandssensor (301) für das Flüssigkeitsniveau.

23. Gerät nach einem der Ansprüche 1 bis 22, bei dem die Ultraschallschwingungseinheit (300) und die Lüftungseinheit (500) von einer gemeinsamen Spannungsversorgung (400) gespeist werden.

24. Verfahren zum Bereitstellen eines Aerosols für die Wartung und/oder Pflege von Klimaanlagen und/oder von Fahrzeuginnenräumen, bei dem Luft oder entsprechendes Gas in einem mit der Reinigungsflüssigkeit teilweise befüllten Behälter eingeführt und nach Aufnahme eines an der Flüssigkeitsoberfläche gebildeten Aerosols den Behälter wieder verlässt, **dadurch gekennzeichnet, daß** eine Luftströmung zentral nach unten auf die Flüssigkeitsoberfläche gerichtet und unter intensivem Durchmischen mit dem Aerosol umgelenkt und das Luft/Aerosol-Gemisch konzentrisch zu dem Zuluftstrom zugeführt und nach außerhalb des Behälters geleitet wird.

25. Verfahren nach Anspruch 24, **gekennzeichnet durch** die Verwendung eines Gerätes gemäß mindestens eines der Ansprüche 1 bis 23.

26. Gerät zum Bereitstellen eines Aerosols für die Wartung und/oder Pflege von Klimaanlagen, mindestens bestehend aus einem mit einer Austrittsöffnung (120) ausgestatteten Gehäuse (100) zur Aufnahme einer Flüssigkeit oder eines Flüssigkeitsgemischs, einer in dem Gehäuse (100) angeordneten Ultraschallschwingungseinheit (300) und einer Lüftungseinheit (500),
**dadurch gekennzeichnet, daß** die Ultraschallschwingungseinheit (300) innerhalb einer Flüssigkeitsvorratszone des Aufnahmegehäuses (100) angeordnet ist, um ein Aerosol zumindest an der freien Oberfläche des Flüssigkeitsvorrates zu erzeugen, und daß ein von der Lüftungseinheit (500) angetriebener Luft- und/oder Aerosolstrom über die Oberfläche des Flüssigkeitsvorrates leitbar und über die Austrittsöffnung (120) sodann nach außerhalb des Gehäuses (100) führbar ist, wobei die Lufteinheit (500) im Betriebszustand zentral oberhalb des Flüssigkeitsvorrates mit der Ultraschallschwingeinheit (300) nach unten genchtet angeordnet ist.

27. Gerät nach Anspruch 26 mit den Merkmalen des Kennzeichnungsteils mindestes eines der Ansprüche 2 bis 23 und/oder mindestens einem Merkmal des Anspruchs 1.

## Claims

1. Device for providing an aerosol for the maintenance and/or servicing of air-conditioning systems, comprising at least
a housing (100) provided with an exit opening (120), for receiving a fluid or a fluid mixture,
an ultrasonic oscillation unit (300) arranged within a fluid supply zone in the receptacle housing (100) in order to generate an aerosol at least at the free surface of the fluid supply and
a ventilator unit (500),
wherein an air stream driven by the ventilator unit (500) can be conducted in the direction toward the surface of the fluid supply and can then be guided out of the receptacle housing (100) via the exit opening (120),
with a device (150) which channels and deflects the air stream from an inflow side to an outflow side,
**characterised in that**, in the operating condition, the ventilator unit (500) is arranged directed downwardly centrally above the fluid supply with the ultrasonic oscillation unit (300).

2. Device according to claim 1, **characterised in that** the channelling and deflecting device (150) is a ventilator tube which is open at the bottom.

3. Device according to claim 1 or 2, **characterised in that** the channelling and deflecting device (150) and the receptacle housing (100) are arranged concentrically to one another.

4. Device according to one of the claims 1 to 3, which has a device (160) which protects the ventilator unit (500) against the aerosol and/or the fluid held in supply.

5. Device according to claim 4, **characterised in that** the protective device (160) has a deflector plate associated with the channelling and deflecting device (150).

6. Device according to claim 5, **characterised in that** the deflector plate is arranged centrally in the mouth region of the channelling and deflecting device (150).

7. Device according to one of the claims 4 to 6, **characterised in that** the protective device (160) is fastened with spacing means to the channelling and deflecting device (150).

8. Device according to one of the claims 5 to 7, **characterised in that** the deflector plate has a concave underside and possibly a convex upper side.

9. Device according to one of the claims 1 to 8, wherein the receptacle housing (100) is equipped, in its upper region, with a central opening (250) which is closable with a cover (200) which can be displaced or removed.

10. Device according to claim 9, wherein the cover (200) is provided with air inlet openings (210).

11. Device according to claim 9 or 10, wherein the ventilator unit (500) is fastened to, and can be moved with, the cover (200).

12. Device according to one of the claims 4 to 11, wherein the device (160) protecting the ventilator unit (500) and the channelling and deflecting device (150) comprise one removable unit.

13. Device according to one of the claims 4 to 12, **characterised in that** the ventilator unit (500), the protective device (160) and the channelling and deflecting device (150) are fastened to, and can be moved with, the cover (200).

14. Device according to one of the claims 1 to 13, **characterised in that** the exit opening (120) of the receptacle housing (100) is arranged on an annular chamber (100A) thereof.

15. Device according to one of the claims 1 to 14, wherein the ultrasonic oscillation unit (300) is arranged in the receptacle housing (100) such that it can be inserted and removed again.

16. Device according to one of the claims 1 to 15, wherein the ultrasonic oscillation unit (300) is arranged in a shaft-like receptacle (101).

17. Device according to one of the claims 1 to 16, **characterised in that** the ultrasonic oscillation unit (300) can be removed from the receptacle housing (100) together with the ventilator unit.

18. Device according to one of the claims 1 to 17, **characterised in that**, for placement and removal, the ultrasonic oscillation unit (300) is provided with a handle.

19. Device according to one of the claims 1 to 18, **characterised in that** the ultrasonic oscillation unit (300) comprises a receptacle body (310) with recesses (320), each for at least one ultrasonic oscillator.

20. Device according to one of the claims 1 to 19, **characterised in that** the ultrasonic oscillation unit (300) is arranged in the base region of a funnel chamber (100B) or in a, particularly cylindrical, chamber region (100D) adjacent thereto.

21. Device according to one of the claims 1 to 20, comprising illumination means within the device (10).

22. Device according to one of the claims 1 to 21, comprising a target level mark (105) and/or a minimum level sensor (301) for the fluid level.

23. Device according to one of the claims 1 to 22, wherein the ultrasonic oscillation unit (300) and the ventilator unit (500) are fed by a common voltage supply (400).

24. Method for providing an aerosol for the maintenance and/or servicing of air-conditioning systems and/or of vehicle interiors, wherein air or a suitable gas is introduced into a container partially filled with the cleaning fluid and, after absorbing an aerosol formed at the fluid surface, leaves the container again, **characterised in that** an air stream is centrally directed downwardly toward the fluid surface and deflected, while intensively mixing with the aerosol, and the air/aerosol mixture is guided concentrically to the inflow air stream and is conducted toward the outside of the container.

25. Method according to claim 24, **characterised by** the use of a device according to at least one of the claims 1 to 23.

26. Device for providing an aerosol for the maintenance and/or servicing of air-conditioning systems, comprising at least
a housing (100) provided with an exit opening (120), for receiving a fluid or a fluid mixture, an ultrasonic oscillation unit (300) arranged in the housing (100) and a ventilator unit (500),
**characterised in that** the ultrasonic oscillation unit (300) is arranged within a fluid supply zone of the receptacle housing (100), in order to generate an aerosol at least at the free surface of the fluid supply, and that an air and/or aerosol stream driven by the ventilator unit (500) can be conducted over the surface of the fluid supply and can then be guided via the exit opening (120) toward the outside of the housing (100), wherein, in the operating condition, the ventilator unit (500) is arranged directed downwardly centrally above the fluid supply with the ultrasonic oscillation unit (300).

27. Device according to claim 26, having the features of the characterising portion of at least one of the claims 2 to 23 and/or at least one feature of claim 1.

## Revendications

1. Appareil de fourniture d'un aérosol pour la maintenance et/ou l'entretien de systèmes de climatisation, comprenant au moins
un boîtier (100) muni d'une ouverture de sortie (120) pour recevoir un liquide ou un mélange de liquide,
une unité génératrice d'ultrasons (300) disposée dans le boîtier de réception (100) à l'intérieur d'une zone de réserve de liquide de celui-ci pour générer un aérosol au moins au niveau de la surface libre de la réserve de liquide, et
une unité de ventilation (500),
dans lequel un courant d'air entraîné par l'unité de ventilation (500) peut être dirigé en direction de la surface de la réserve de liquide et peut ensuite être guidé par l'intermédiaire de l'ouverture de sortie (120) vers l'extérieur du boîtier de réception (100),
avec un dispositif (150) canalisant le courant d'air et le déviant d'un côté affluence vers un côté effluence,
**caractérisé en ce qu'**à l'état opérationnel, l'unité de ventilation (500) est disposée de façon centrale au-dessus de la réserve de liquide, l'unité génératrice d'ultrasons (300) étant tournée vers le bas.

2. Appareil selon la revendication 1, **caractérisé en ce que** le dispositif de canalisation et de déviation (150) est un tuyau de déflexion d'air ouvert en bas.

3. Appareil selon la revendication 1 ou 2, **caractérisé en ce que** le dispositif de canalisation et de déviation (150) et le boîtier de réception (100) sont disposés de façon concentrique l'un par rapport à l'autre.

4. Appareil selon l'une quelconque des revendications 1 à 3, avec un dispositif (160) protégeant l'unité de ventilation (500) contre l'aérosol et/ou contre le liquide conservé en réserve.

5. Appareil selon la revendication 4, **caractérisé en ce que** le dispositif de protection (160) présente une chicane attribuée au dispositif de canalisation et de déviation (150).

6. Appareil selon la revendication 5, **caractérisé en ce que** la chicane est disposée de façon centrale dans la zone d'embouchure du dispositif de canalisation et de déviation (150).

7. Appareil selon l'une quelconque des revendications 4 à 6, **caractérisé en ce que** le dispositif de protection (160) est fixé avec des moyens d'espacement par rapport au dispositif de canalisation et de déviation (150).

8. Appareil selon l'une quelconque des revendications 5 à 7, **caractérisé en ce que** la chicane présente une face inférieure concave et éventuellement une face supérieure convexe.

9. Appareil selon l'une quelconque des revendications 1 à 8, dans lequel le boîtier de réception (100) est muni dans sa zone supérieure d'une ouverture centrale (250) pouvant être fermée par un couvercle mobile ou amovible (200).

10. Appareil selon la revendication 9, dans lequel le couvercle (200) est muni d'orifices d'entrée d'air (210).

11. Appareil selon la revendication 9 ou 10, dans lequel l'unité de ventilation (500) est fixée au couvercle (200) et peut être déplacée avec celui-ci.

12. Appareil selon l'une quelconque des revendications 4 à 11, dans lequel le dispositif (160) protégeant l'unité de ventilation (500) et le dispositif de canalisation et de déviation (150) forment une unité détachable.

13. Appareil selon l'une quelconque des revendications 4 à 12, **caractérisé en ce que** l'unité de ventilation (500), le dispositif de protection (160) et le dispositif de canalisation et de déviation (150) sont fixés au couvercle (200) et peuvent être déplacés avec celui-ci.

14. Appareil selon l'une quelconque des revendications 1 à 13, **caractérisé en ce que** l'ouverture de sortie (120) du boîtier de réception (100) est disposée au niveau d'un espace annulaire (100 A) de celui-ci.

15. Appareil selon l'une quelconque des revendications 1 à 14, dans lequel l'unité génératrice d'ultrasons (300) est disposée dans le boîtier de réception (100) de façon à pouvoir être insérée et de nouveau retirée.

16. Appareil selon l'une quelconque des revendications 1 à 15, dans lequel l'unité génératrice d'ultrasons (300) est disposée dans un logement (101) de type cuve.

17. Appareil selon l'une quelconque des revendications 1 à 16, **caractérisé en ce que** l'unité génératrice d'ultrasons (300) peut être retirée du boîtier de réception (100) en conjonction avec l'unité de ventilation.

18. Appareil selon l'une quelconque des revendications 1 à 17, **caractérisé en ce que** l'unité génératrice d'ultrasons (300) est munie d'une manette pour l'insertion et pour le retrait.

19. Appareil selon l'une quelconque des revendications 1 à 18, **caractérisé en ce que** l'unité génératrice d'ultrasons (300) présente un corps de réception (310) avec des évidements (320) pour respectivement au moins un générateur d'ultrasons.

20. Appareil selon l'une quelconque des revendications 1 à 19, **caractérisé en ce que** l'unité génératrice d'ultrasons (300) est disposée dans la zone de fond d'un espace formant entonnoir (100 B) ou dans une zone d'espace adjacente à celle-ci, en particulier cylindrique (100 D).

21. Appareil selon l'une quelconque des revendications 1 à 20, comprenant des moyens d'éclairage à l'intérieur de l'appareil (10).

22. Appareil selon l'une quelconque des revendications 1 à 21 avec un repère de niveau de consigne (105) et/ou un capteur de niveau minimum (301) pour le niveau de liquide.

23. Appareil selon l'une quelconque des revendications 1 à 22, dans lequel l'unité génératrice d'ultrasons (300) et l'unité de ventilation (500) sont alimentées par une alimentation en tension commune (400).

24. Procédé de fourniture d'un aérosol pour la maintenance et/ou l'entretien de systèmes de climatisation et/ou d'habitacles de véhicule, dans lequel l'air ou un gaz adéquat est introduit dans un récipient partiellement rempli du liquide de nettoyage, et ressort du récipient après absorption d'un aérosol formé à la surface du liquide, **caractérisé en ce qu'**un écoulement d'air est dirigé de façon centrale vers le bas sur la surface de liquide et est dévié en étant mélangé de façon intensive avec l'aérosol, et le mélange air/aérosol est amené de façon concentrique par rapport au courant d'air frais et ensuite dirigé vers l'extérieur du récipient.

25. Procédé selon la revendication 24, **caractérisé par** l'utilisation d'un appareil selon au moins l'une des revendications 1 à 23.

26. Appareil de fourniture d'un aérosol pour la maintenance et/ou l'entretien de systèmes de climatisation, composé au moins d'un boîtier (100) muni d'une ouverture de sortie (120) pour recevoir un liquide ou un mélange de liquide, d'une unité génératrice d'ultrasons (300) disposée dans le boîtier (100) et d'une unité de ventilation (500), **caractérisé en ce que** l'unité génératrice d'ultrasons (300) est disposée à l'intérieur d'une zone de réserve de liquide du boîtier de réception (100) pour générer un aérosol au moins au niveau de la surface libre de la réserve de liquide, et **en ce qu'**un courant d'air et/ou d'aérosol entraîné par l'unité de ventilation (500) peut être dirigé à travers la surface de la réserve de liquide et peut ensuite être guidé à travers l'ouverture de sortie (120) vers l'extérieur du boîtier (100), dans lequel, à l'état opérationnel, l'unité de ventilation (500) est disposée de façon centrale au-dessus de la réserve de liquide, l'unité génératrice d'ultrasons (300) étant tournée vers le bas.

27. Appareil selon la revendication 26 ayant les particularités de la partie caractérisante d'au moins l'une des revendications 2 à 23 et/ou au moins une particularité de la revendication 1.
